(19) Europäisches Patentamt
European Patent Office
Office européen des brevets

(11) **EP 2 683 521 B1**

(12) **EUROPÄISCHE PATENTSCHRIFT**

(45) Veröffentlichungstag und Bekanntmachung des Hinweises auf die Patenterteilung:
**06.12.2017 Patentblatt 2017/49**

(51) Int Cl.:
***B23K 26/36*** *(2014.01)*   ***B23K 26/40*** *(2014.01)*
***B23K 26/00*** *(2014.01)*   ***B29D 11/00*** *(2006.01)*

(21) Anmeldenummer: **12711762.0**

(22) Anmeldetag: **06.03.2012**

(86) Internationale Anmeldenummer:
**PCT/EP2012/000992**

(87) Internationale Veröffentlichungsnummer:
**WO 2012/119761 (13.09.2012 Gazette 2012/37)**

(54) **VERFAHREN ZUR FERTIGUNG OPTISCHER ELEMENTE DURCH BEARBEITUNG MIT ENERGETISCHER STRAHLUNG**

METHOD FOR PRODUCING OPTICAL ELEMENTS BY WORKING WITH HIGH-ENERGY RADIATION

PROCÉDÉ DE FABRICATION D'ÉLÉMENTS OPTIQUES AU MOYEN D'UN USINAGE PAR RAYONNEMENT ÉNERGÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.03.2011 DE 102011013514**
**09.06.2011 DE 102011103793**

(43) Veröffentlichungstag der Anmeldung:
**15.01.2014 Patentblatt 2014/03**

(73) Patentinhaber: **Fraunhofer-Gesellschaft zur Förderung der angewandten Forschung e.V.**
**80686 München (DE)**

(72) Erfinder:
• **HEIDRICH, Sebastian**
  **52074 Aachen (DE)**
• **WILLENBORG, Edgar**
  **52146 Würselen (DE)**
• **RICHMANN, Annika**
  **52064 Aachen (DE)**
• **WISSENBACH, Konrad**
  **52134 Herzogenrath (DE)**

(74) Vertreter: **Gagel, Roland**
  **Patentanwalt Dr. Roland Gagel**
  **Landsberger Strasse 480a**
  **81241 München (DE)**

(56) Entgegenhaltungen:
**WO-A1-96/31315     DE-B3-102008 038 395**
**GB-A- 2 381 769**

## Beschreibung

## Technisches Anwendungsgebiet

Die vorliegende Erfindung betrifft ein Verfahren zur Fertigung von aus Rohlingen formbaren optischen Elementen durch Bearbeitung mit energetischer Strahlung, vorzugsweise mit Laserstrahlung.

Die konventionelle Fertigung optischer Elemente, welche von einer sphärischen Oberflächenform abweichen, benötigt sowohl eine lange Vorbereitungs- als auch Herstellungszeit und ist demnach zeit- und kostenintensiv. Asphären und Freiformflächen können jedoch mehrere sphärische Elemente ersetzen und dadurch zu geringeren Bauteilabmessungen und reduziertem Gewicht führen. Die hier vorgestellte Fertigungskette soll dazu dienen, optische Elemente wie beispielsweise Linsen mit variabler Oberflächenkontur ausgehend von einem Rohling durch die Bearbeitung mit energetischer Strahlung schnell, flexibel und kostengünstig herzustellen.

## Stand der Technik

Die Hauptfertigungstechnologie für hochpräzise, refraktive optische Elemente in der Optikfertigung stellt derzeit das Schleifen dar. Dabei werden einerseits Preformen (vorgeformte Rohglasteile) mit minimiertem Schleifaufwand zu fertigen Linsen umgeschliffen und andererseits mit vergleichsweise hohem Schleifaufwand Linsen direkt aus Glasronden geschliffen. Da dem Schleifen ein statistischer Abtragprozess zugrunde liegt, ist es für die Herstellung von einfachen Geometrien wie sphärischen oder planaren Flächen geeignet. Dabei wird das Glas über einen Linienkontakt und damit eine vergleichsweise große Fläche bearbeitet. Asphärische Oberflächengeometrien oder Freiformflächen lassen sich nur mit erheblichem Aufwand durch Schleifen erzeugen, da in diesem Fall aufgrund der von der sphärischen Form abweichenden Oberfläche kein Linien- sondern ein Punktkontakt zur Bearbeitung verwendet werden muss.

Blankpressen und Heißprägen stellen replizierende und damit kostengünstige Alternativen zur Fertigung einzelner Optiken mittels etablierter Schleiftechnologien dar. Durch Verwendung verschiedenster Werkzeugmaterialien, wie Edelstahl, Keramik, Hartmetalle, usw. können Kunststoffe und Glas für optische Anwendungen durch Heißprägen oder Blankpressen abgeformt werden. Eine Nachbearbeitung der geprägten Optik ist nicht erforderlich. Die zeitaufwändige Herstellung der hochpräzisen Prägeformen wird durch kurze Taktzeiten (derzeit mehrere Minuten) beim Replikationsprozess ausgeglichen und ermöglicht den wirtschaftlichen Einsatz dieser Technologie. Gläser mit hohen Verarbeitungstemperaturen (z.B. Quarzglas) können zurzeit nicht bearbeitet werden, obwohl sie für diverse Anwendungen (UV-Bereich, hohe Laserleistung, hohe thermische Belastung) sehr interessant sind. Darüber hinaus erfordern Umformtemperaturen von zwischen 400 und 800°C temperaturstabile und ultraharte Werkzeugmaterialien. Diese können nur mit großem Zeitaufwand schleifend unter entsprechendem Werkzeugverschleiß bearbeitet werden.

Das gängigste Polierverfahren für Glaselemente ist das Nass-Schleifen mittels Hartstoffen, z.B. Sic (Siliziumkarbid), Korund oder Diamant, die je nach Zweck in Scheiben, Papier oder Metall gebunden sind oder als Suspension vorliegen. Mit sinkender Korngröße sinken Abtragsleistung, Rauheit und Risstiefe der bearbeiteten Fläche. In zeitaufwändiger Weise werden Risse bis in die Wurzel entfernt und Rauheitswerte in Abhängigkeit vom zu polierenden Werkstoff bis minimal $Ra \approx 0,1$ nm erreicht. Allerdings werden hierfür große Mengen an Verbrauchsmaterialien verwendet. Schleif- und Poliermittel können zudem in die Oberfläche eingearbeitet werden und dadurch Absorptions- und Streuverluste steigern, was z.B. bei Laserstrahlquellen zur Zerstörung der Optiken führen kann.

Die dargestellte Politur ist im Wesentlichen nur für ebene und sphärische Oberflächen geeignet. Für das Polieren von asphärischen und Freiformflächen wird zunehmend das magnetorheologische Polieren (MRF) angewendet. Auf ein drehendes Trägerrad wird kontinuierlich eine magnetische Flüssigkeit aufgetragen. In der Kontaktzone zum zu polierenden Glas wird die Flüssigkeit durch ein Magnetfeld versteift. Der Materialabtrag erfolgt somit lokal, wodurch sich das Verfahren für asphärische Oberflächen eignet. Der besondere Vorteil liegt in den konstanten Prozessbedingungen, die einen definierten Materialabtrag erlauben. Konkave und filigrane Oberflächen können jedoch nur begrenzt bearbeitet werden, da die verwendeten Trägerräder eine erhebliche Größe aufweisen. Typische Bearbeitungszeiten für MRF-Präzisionspolituren von Quarz-Asphären liegen im Bereich von einer Stunde.

Weiterhin ist im Bereich der Mikrobearbeitung das Abtragen von Glas mit Laserstrahlung bekannt. Dies kann auf verschiedene Arten erfolgen. So kann bspw. Quarzglas unter Verwendung von gepulster $CO_2$-Laserstrahlung abgetragen werden. Die von einem $CO_2$-Laser emittierte Strahlung mit einer Wellenlänge von 10,6 $\mu$m wird von Quarzglas zu etwa 20% reflektiert und zu etwa 80% oberflächennah absorbiert. Dadurch erfolgt bei genügend großer Intensität eine Materialverdampfung und dadurch ein Materialabtrag, der durch die Variation von Laserleistung, Pulsdauer und weiteren Parametern kontrolliert werden kann. Mit dieser Technik konnten Mikrolinsen (ø = 1 mm) mit einer Abtragrate von 0,0004 mm$^3$/s und einer resultierenden Oberflächenrauheit von $Ra \approx 1$ $\mu$m gefertigt werden. Ein derartiges Verfahren für die Mikrobearbeitung von Glas bleibt jedoch hinter den für die wirtschaftliche Herstellung von Makrooptiken erforderlichen zu bearbeitenden Abmessungen sowie benötigten hohen Abtragraten zurück.

DE 10 2007 058 105 A1 beschreibt ein Verfahren zur Bearbeitung von optischen Elementen mittels Laserablation, bei dem die Technik des laserinduzierten Nassätzens zur Bearbeitung eines Rohlings eingesetzt wird. Die Bearbeitung erfolgt dabei ausgehend von einem Grobabtrag bis hin zu einem Feinstabtrag.

Die US 5,257,706 A beschreibt ein Laser-Ablationsverfahren zur Formung optischer Oberflächen mittels Laserstrahlung im UV-Bereich.

Weiterhin ist es beispielsweise aus der DE 102 28 743 A1 bekannt, Werkstückoberflächen mit Laserstrahlung zu polieren. Das Polieren der Oberflächen wird durch eine oberflächennahe Aufheizung des Materials mit $CO_2$-Laserstrahlung auf knapp unterhalb der Verdampfungstemperatur und ein Ausfließen der Rauheiten infolge der Grenzflächenspannung ermöglicht. Durch die Verwendung von Lasern zur Oberflächenpolitur wird der Polier-prozess von der aktuell vorliegenden Form des Werkstücks entkoppelt, so dass sich nahezu beliebige Geometrien und Freiformflächen polieren lassen. Die Laserpolitur von Glas beruht also auf der Umverteilung von Material durch Umschmelzen und ist somit im Grundprinzip der konventionellen Flammpolitur von Glas ähnlich. Aufgrund der hohen Präzision der Energieeinbringung werden beim Polieren mit Laserstrahlung aber signifikant kleinere Rauheiten als bei der Flammpolitur erreicht. Mikrorauheiten werden dabei besonders effektiv geglättet. Zur Vermeidung von Rissen wird bei rissempfindlichen Gläsern eine Vorheizung eingesetzt.

Die bisher für die Fertigung optischer Elemente mit Durchmessern oberhalb von einem Millimeter eingesetzten Technologien sind zwar für die Fertigung optischer Elemente mit sphärischen Oberflächen geeignet, lassen sich aber nicht flexibel für die Fertigung optischer Elemente mit nicht-sphärischen Oberflächen einsetzen.

Die Aufgabe der vorliegenden Erfindung besteht daher darin, ein Verfahren zur Fertigung optischer Elemente anzugeben, das die Fertigung auch von größeren optischen Elementen (Durchmesser > 1 mm) mit nicht-sphärischen Oberflächen flexibel und mit geringer Herstellungszeit ermöglicht.

**Darstellung der Erfindung**

Die Aufgabe wird mit dem Verfahren gemäß Patentanspruch 1 gelöst. Vorteilhafte Ausgestaltungen des Verfahrens sind Gegenstand der abhängigen Patentansprüche oder lassen sich der nachfolgenden Beschreibung sowie dem Ausführungsbeispiel entnehmen.

Bei dem vorgeschlagenen Verfahren wird zunächst ein Rohling für die Fertigung des optischen Elements bereitgestellt, der vorzugsweise aus Quarzglas besteht. Der Rohling kann beispielsweise ein zylindrisches, sphärisches oder auch planes Bauteil sein. In einer ersten Fertigungsphase erfolgt die Bearbeitung mindestens einer Oberfläche des Rohlings zur Annäherung an eine Soll-Oberflächenkontur durch Grobabtrag von Material mittel energetischer Strahlung. Dieser Grobabtrag wird ebenso wie die nachfolgenden Bearbeitungsschritte vorzugsweise mit Laserstrahlung durchgeführt, kann jedoch auch mit einer anderen Art energetischer Strahlung erfolgen, bspw. mit Ionen oder Elektronenstrahlen. Vorzugsweise erfolgt der Grobabtrag in einem Durchgang, d. h. durch einmaliges Führen des energetischen Strahls über die zu bearbeitende Oberfläche. Die unterschiedlich hohen Abtragraten für die Annäherung an die Soll-Oberflächenkontur werden dabei durch Variation der Leistung des energetischen Strahls und/oder durch Variation der Bewegungsgeschwindigkeit des energetischen Strahls über die Oberfläche erreicht. In einer weiteren Ausgestaltung erfolgt der Grobabtrag iterativ in mehreren Durchgängen bzw. Abtragphasen, wobei nach jeder Abtragphase die Oberflächenkontur optisch vermessen und mit der Soll-Oberflächenkontur verglichen wird. Auf Basis des Vergleichs erfolgt dann jeweils ein neuer Abtragvorgang, bis die gewünschte Annäherung an die Soll-Oberflächenkontur erreicht ist. Für den Grobabtrag wird vorzugsweise ein Laser mit einer Laserleistung zwischen 100 W und 5 kW eingesetzt, insbesondere ein $CO_2$-Laser. Die Abtragrate sollte beim Grobabtrag vorzugsweise bei $\geq 10$ mm$^3$/s liegen, insbesondere bei $\geq 20$ mm$^3$/s.

Nach dem Grobabtrag, durch den die gewünschte Oberflächenkontur innerhalb vorgegebener Toleranzen vorzugsweise bereits erreicht wird, erfolgt entweder direkt oder nach einer zwischengeschalteten Feinstabtragphase ein Polieren der Oberfläche mittels energetischer Strahlung. Unter dem Polieren wird in der vorliegenden Patentanmeldung ein Polieren ohne Materialabtrag verstanden. Bei diesem Polieren wird vorzugsweise die Viskosität des Oberflächenmaterials des Rohlings durch Erhitzung mit der energetischen Strahlung verringert, wobei sich aufgrund der Oberflächenspannung eine glättende Wirkung ergibt. Nach einem Polierdurchgang in direktem Anschluss an den Grobabtrag in einer der Verfahrensalternativen wird die Oberflächenkontur und Oberflächenrauheit der polierten Oberfläche vorzugsweise optisch vermessen und mit der Soll-Oberflächenkontur und Soll-Oberflächenrauheit verglichen. Liegt eine Abweichung vor, die außerhalb einer jeweils vorgegebenen Toleranzgrenzen liegt, so schließt sich ein Feinstabtrag der Oberfläche mittels energetischer Strahlung an. Bei diesem Feinstabtrag werden eventuell noch vorhandene Welligkeiten oder sonstige Abweichungen von der Soll-Oberflächenkontur oder Soll-Oberflächenrauheit verringert, bis diese innerhalb der vorgebenen Toleranzgrenzen liegen. Vorzugsweise erfolgt der Feinstabtrag wiederum iterativ, wobei nach jeder Abtragphase die Oberflächenkontur und Oberflächenrauheit jeweils erneut vermessen und mit der Soll-Oberflächenkontur und Soll-Oberflächenrauheit verglichen werden. Auf Basis des Vergleichs erfolgt dann jeweils ein neuer Durchgang, d.h. ein weiterer Feinstabtrag, bis die jeweils gemessene Abweichung innerhalb der vorgebenen Toleranzgrenze liegt. Der Feinstabtrag kann auch jeweils im Wechsel mit einem Poliervorgang durchgeführt werden. In diesem Fall, werden nach jeder Abtragphase und nach jeder Polierphase die Oberflächenkontur und Oberflächenrauheit jeweils erneut vermessen und mit der Soll-Oberflächenkontur und Soll-Oberflächenrauheit verglichen. Auf Basis des Vergleichs erfolgt dann jeweils ein neuer Durchgang, d.h. ein weiterer Feinstabtrag bzw. ein weiterer Poliervorgang, bis die jeweils gemessene Abweichung innerhalb der vorgegebenen Toleranzgrenze liegt.

Beim Feinstabtrag werden im Gegensatz zum Grobabtrag nur sehr geringe Materialmengen abgetragen. Dies erfolgt vorzugsweise, indem ein energetischer Strahl mit geringerer Leistung als beim Grobabtrag auf die Oberfläche fokussiert und mit variabler Bewegungsgeschwindigkeit über die Oberfläche geführt wird, wobei durch gezielte lokale Reduktion der Bewegungsgeschwindigkeit lokal Material verdampft wird, während in Bereichen mit höherer Bewegungsgeschwindigkeit aufgrund des geringeren Energieeintrags kein Materialabtrag erfolgt. Bei Einsatz eines Lasers, insbesondere eines $CO_2$-Lasers oder eines Ultrakurzpuls-Lasers, wird für den Feinstabtrag vorzugsweise eine Laserleistung zwischen 1 W und 250 W eingesetzt. Vorzugsweise erfolgen der Grobabtrag und der Feinstabtrag bei der vorliegenden Erfindung durch direkte Einwirkung der energetischen Strahlung auf die Oberfläche des Rohlings, d.h. ohne ein zusätzliches Abtragungsmittel.

In einer zweiten Verfahrensalternative wird der Feinstabtrag in der oben beschriebenen Weise vor dem Polieren durchgeführt. Dies bietet sich vor allem in Fällen an, in denen eine Abweichung von der Soll-Oberflächenkontur oder Soll-Oberflächenrauheit bereits nach dem Grobabtrag durch Feinstabtrag so beseitigt werden kann, dass nach dem Polieren kein weiterer Feinstabtrag mehr erforderlich ist, um die gewünschte Oberflächenkontur und Oberflächerauheit innerhalb der Toleranzgrenzen zu erhalten.

Der Poliervorgang erfolgt vorzugsweise mit Laserstrahlung als energetischer Strahlung. Hierzu kann ein $CO_2$-Laser im kontinuierlichen Betrieb eingesetzt werden, der vorzugsweise defokussiert über die Oberfläche geführt wird, beispielsweise mittels einer oszillierenden Bewegung. Die Laserintensitäten liegen beim Polieren vorzugsweise zwischen 10 $W/cm^2$ und 1000 $W/cm^2$ bei einem Strahldurchmesser des Laserstrahls auf der Oberfläche von mindestens 2 mm.

Durch die vorgeschlagene Fertigungskette, bei der bereits der Grobabtrag mittels energetischer Strahlung erfolgt, lassen sich asphärische Oberflächen und nahezu beliebige Freiformflächen flexibel erzeugen. Unter Grobabtrag ist hierbei ein Materialabtrag zu verstehen, bei dem die Abtragtiefe pro Überfahrt vorzugsweise bei > 5 $\mu$m und das abgetragene Volumen pro Zeit vorzugsweise bei $\geq$ 10 $mm^3/s$, besonders bevorzugt bei $\geq$ 20 $mm^3/s$, liegen. Beim Feinstabtrag liegen hingegen die Abtragtiefe pro Überfahrt vorzugsweise bei < 1 $\mu$m, besonders bevorzugt bei < 100 nm, und das abgetragene Volumen pro Zeit vorzugsweise bei $\leq$ 5 $mm^3/s$. Grundsätzlich zielt der Grobabtrag auf eine möglichst große Abtragrate ab, während der Feinstabtrag eine möglichst geringe Abtragtiefe pro Überfahrt erreichen soll. Die gewünschte Oberflächenkontur kann dabei alleine durch Steuerung der Laserleistung und/oder Bewegungsgeschwindigkeit des energetischen Strahls über die zu bearbeitende Oberfläche erzeugt werden. Durch eine ausreichende Laserleistung lassen sich für eine schnelle Fertigung ausreichend hohe Abtragraten erzielen. Durch das anschließende Polieren und ggf. den zusätzlichen Feinstabtrag werden die gewünschte Oberflächenrauheit erreicht und eventuell noch Abweichungen von der Oberflächenkontur korrigiert. Ein wesentlicher Vorteil des vorgeschlagenen Verfahrens ist die Flexibilität des Gesamtprozesses bezogen auf die Oberflächenform bzw. Oberflächenkontur und die dadurch erreichbare Individualisierung sowie eine im Vergleich zu bisherigen Techniken sehr viel kürzere Herstellungszeit. Ein weiterer Vorteil besteht in der Möglichkeit, auch hochschmelzende Gläser wie bspw. Quarzglas zu verarbeiten. Gerade für Quarzglasoptiken in der Laserindustrie verspricht das Laserpolieren aufgrund dessen geringerer resultierender Mikrorauheit eine höhere Zerstörschwelle und dadurch ein stabileres und langlebigeres Produkt.

Das Verfahren lässt sich für alle Bereiche der Herstellung optischer Elemente einsetzen. Hauptanwendungsgebiet ist die Fertigung von asphärisch geformten Linsen und optischen Elementen mit Freiformflächen in kleinen Mengen, da die geringe Vorlauf- und Fertigungszeit sowie die hohe Flexibilität des Verfahrens deutliche Vorteile gegenüber den etablierten Herstellungsverfahren bringen. Das vorgeschlagene Verfahren eignet sich jedoch auch für anders geformte optische Elemente, prinzipiell für optische Elemente mit beliebiger Oberflächenform. Als Materialien kommen bspw. Gläser, Glaskeramiken und Kunststoffe zum Einsatz.

Für die einzelnen Verfahrensabschnitte des Grobabtrags, des Polierens und des Feinstabtrags kann vorteilhaft die gleiche Strahlquelle, bspw. der gleiche Laser, eingesetzt werden. Selbstverständlich lassen sich die einzelnen Prozessabschnitte jedoch auch mit unterschiedlichen Strahlquellen realisieren.

**Kurze Beschreibung der Zeichnungen**

Das vorgeschlagene Verfahren wird nachfolgend anhand eines Ausführungsbeispiels in Verbindung mit den Zeichnungen nochmals kurz erläutert. Hierbei zeigen:

Fig. 1    eine schematisierte Darstellung der vorgeschlagenen Fertigungskette; und

Fig. 2    das Schema einer geschliffenen Sphäre als Ausgangszustand für die Fertigung eines Elementes mit asphärischer Oberfläche.

**Wege zur Ausführung der Erfindung**

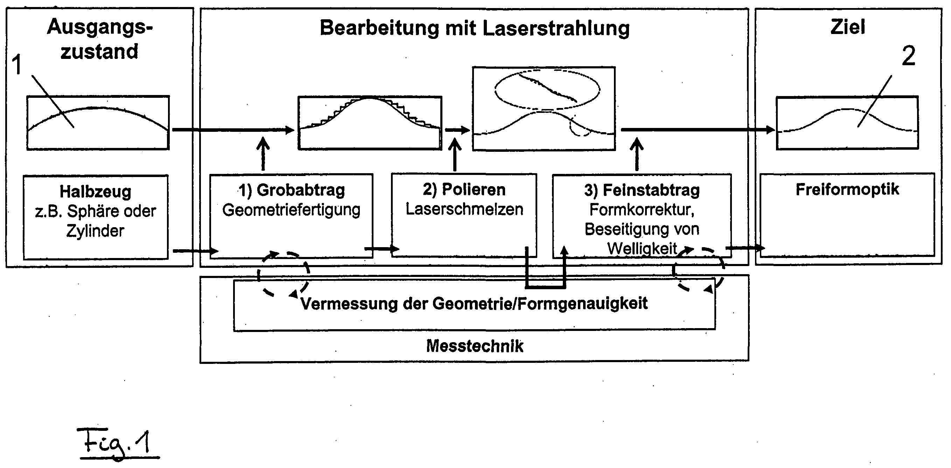

Das vorgeschlagene Verfahren wird im Folgenden anhand der in Figur 1 dargestellten beispielhaften Fertigungskette zur Herstellung eines optischen Elements nochmals näher erläutert.

Entsprechend ihrem vorgegebenen Design wird die Form des optischen Elementes aus einem zylindrischen, sphärischen oder auch planen Rohling 1 aus Quarzglas zunächst durch Lasergrobabtragen, d. h. verdampfendes Abtragen mit Laserstrahlung, angenähert. Dabei wird das Werkstück nach einem ersten Abtragvorgang vermessen und bis zum Unterschreiten einer definierten Abweichungstoleranz iterativ weiteren feineren Grobabtragprozessen unterzogen. Anschließend wird die entstandene Oberfläche durch Erniedrigung der Viskosität mit Laserstrahlung poliert, worauf erneut ein Soll-Ist-Vergleich von Geometrie und Oberflächengüte erfolgt. Gegebenenfalls wird nun eine Formkorrektur durch Laser-Präzisionsabtragen (Feinstabtrag) bzw. durch Laserschmelzen an dem optischen Element vorgenommen, das anschließend wiederum vermessen wird. Dieser letzte Prozesstakt wird wiederholt, bis das fertig gestellte optische Element 2 im Rahmen der gewünschten Toleranz mit dem Design übereinstimmt.

Der Lasergrobabtrag dient dem schnellen Entfernen nicht benötigten Materials, um die Soll-Oberflächenkontur möglichst schnell zu erreichen. Dabei liegt der Schwerpunkt auf einer großen Abtragrate und dadurch einer kurzen Prozesszeit für diesen Herstellungsschritt. Durch eine hohe kontinuierliche Laserleistung von bis zu 5 kW am Werkstück und die Arbeit im Strahlfokus wird eine lokal hoch aufgelöste große Abtragrate von über 20 mm$^3$/s erreicht. Wie bei den weiteren Prozessschritten wird der Laserstrahl mittels eines Scanners oder eines Achssystems auf der zu bearbeitenden Glasoberfläche positioniert. Eine Absaugung des entstehenden Glasdampfs verhindert eine Beschädigung der Anlagenkomponenten und die mögliche Beeinträchtigung des Prozesses durch Absorption der Laserstrahlung in der Dampfwolke.

Die nach dem Grobabtrag entstehende Oberfläche erreicht durch die Ausrichtung auf eine große Abtragrate nicht die für optische Elemente benötigte Qualität in Bezug auf Oberflächenrauheit und Formgenauigkeit. Diese wird durch den folgenden Polierschritt erreicht, welcher die Oberfläche lediglich erhitzt, um deren Viskosität zu erniedrigen, und diese ohne weiteren Materialabtrag aufgrund der Oberflächenspannung glättet. Dabei wird der Laser stark defokussiert im kontinuierlichen Betrieb durch eine Oszillation der Scannerspiegel in einer Quasilinie über das Werkstück geführt und erhitzt das Material bis knapp unter den Verdampfungspunkt. Je näher die Oberflächentemperatur der Verdampfungstemperatur kommt, desto geringer werden die sich ergebenden Oberflächenrauheiten. Eine Temperaturkontrolle kann entweder manuell über eine Prozessbeobachtung oder aber automatisch durch ein Pyrometer inklusive Regelung erfolgen, wobei eine zu große Temperatur durch entstehende Dampfwolken beim Überschreiten der Verdampfungstemperatur erkannt werden kann. Der Polierschritt kann bspw. mit einem Linienfokus oder auch mit einer integralen Bestrahlung durchgeführt werden. Letzteres bietet sich insbesondere bei flachen Oberflächen an.

Durch den Poliervorgang wird die Mikrorauheit der bearbeiteten Oberfläche bereits effektiv und im für Optiken ausreichenden Maß geglättet. Es entsteht jedoch eine Welligkeit mit Wellenlängen > 100 $\mu$m, welche durch den Polier-Prozess nicht entfernt werden kann. Nach einer durch eine geeignete Messung festgestellten Lage und Orientierung dieser Welligkeiten werden sie durch den im dritten Prozessschritt angewandten Feinstabtrag entfernt. Dabei wird lokal begrenzt Material von wenigen nm Dicke von der Werkstückoberfläche entfernt, ohne die davor erreichte Oberflächenrauheit zu verändern. Dazu wird der Laser mit geringer kontinuierlicher Leistung fokussiert auf die Probe gerichtet, welche sich bis knapp unter den Verdampfungspunkt erwärmt. Durch eine Verringerung der Bewegungsgeschwindigkeit des Laserstrahls über das herzustellende Werkstück vergrößert sich die lokale Energieeinbringung, so dass die Temperatur steigt und statt des Aufschmelz- ein Verdampfungsprozess eintritt. Dieser Prozess ist sehr genau steuerbar und erlaubt eine örtlich hoch aufgelöste Bearbeitung der Oberfläche.

Zum Lasergrob- sowie Laserfeinstabtrag können wahlweise $CO_2$-Laserstrahlung oder Ultrakurzpulslaser verwendet werden. Das abzutragende Volumen liegt bei Ultrakurzpulslasern prinzipbedingt im Fokuspunkt, bei $CO_2$-Laserstrahlung kann der Abtrag auch defokussiert und sowohl im kontinuierlichen als auch gepulsten Betrieb erfolgen. Die erreichbare Abtragrate liegt bei Verwendung von $CO_2$-Lasern aufgrund der höheren verfügbaren Leistungen sowie der Möglichkeit der kontinuierlichen Bearbeitung bei weitem höher als bei Einsatz eines Ultrakurzpulslasers, wobei letztere eine lokal besser aufgelöste Bearbeitung ermöglichen. Da das Polieren vorzugsweise ausschließlich mit $CO_2$-Laser-strahlung erfolgt, wird auch für die Abtragprozesse die Verwendung eines $CO_2$-Lasers favorisiert.

Bei verschiedenen Werkstoffen wird das Bauteil (Rohling bzw. optisches Element) vorzugsweise auf eine Temperatur oberhalb der Raumtemperatur vorgeheizt, um Bauteilspannungen während der Bearbeitung zu reduzieren. Die erhöhte Temperatur wird vorzugsweise auch über einen Zeitraum nach der Bearbeitung aufrecht erhalten. Auch ein Temperprozess kann nachgeschaltet werden.

Das beschriebene Herstellungsverfahren eignet sich prinzipiell für optische Elemente mit beliebiger Oberflächenform. Von besonderer Bedeutung ist es jedoch für alle von der sphärischen Grundform abweichenden Oberflächen wie Asphären oder Freiformflächen. Grund hierfür ist die zeit- und kostenaufwendige Herstellung solcher Elemente mit den oben beschriebenen konventionellen Fertigungsmethoden.

Die optische Vermessung der Oberflächenkontur und Oberflächenrauheit erfolgt vorzugsweise mit Hilfe eines chromatischen oder eines interferometrischen Messverfahrens. Das interferometrische Messverfahren kann mittels Weißlicht oder auch mittels Infrarotlicht durchgeführt werden. Die Vermessung des optischen Elementes kann hierbei auch über deren Unterseite erfolgen, d.h. die der bearbeitenden Oberfläche gegenüberliegende Seite. Ist diese Seite als polierte Planfläche ausgebildet, dann kann diese polierte und nicht bearbeitete Planfläche des Elementes als Referenzfläche bei der Vermessung dienen.

Im Folgenden wird eine Abschätzung der Prozesszeit für die Fertigung einer Asphäre mithilfe des vorgeschlagenen laserbasierten Fertigungsverfahrens gegeben. Die Gesamtprozesszeit t setzt sich aus den einzelnen Prozesszeiten der Formgebung durch Grobabtragen $t_G$ des Polierprozesses $t_P$, der Formkorrektur $t_F$, der Vermessungszeit $t_M$ und der Einrichtzeit $t_E$ für die Messapparatur und den Wechsel z.B. zwischen cw- und gepulstem Mode des Lasers zusammen:

$$t = t_G + t_P + t_M + t_F + t_E$$

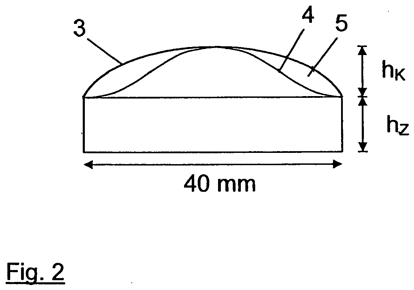

In diesem Beispiel wird eine Asphäre 4 aus einer sphärischen Linse 3 mit 40 mm Durchmesser, einer Höhe des sphärischen Kugelabschnitts $h_K$, und einer Höhe des zylindrischen Abschnitts $h_Z$ gefertigt, wie sie in Figur 2 schematisch angedeutet ist.

Das abzutragende Volumen 5 liegt in diesem Beispiel je nach Form der Asphäre im Bereich 1 - 4 cm$^3$. Bei einer Abtragrate von 20 mm$^3$/s im Grobabtrag bedeutet dies eine Prozesszeit $t_G$ von $\leq$ 200 s. Beim Polieren werden Flächenraten von bis zu 1 cm$^2$/s erreicht. Damit wird für die Politur der Asphäre eine Polierzeit von $t_P \leq$ 20 s benötigt. Bei der Formkorrektur werden die Bereiche korrigiert, die bei der Vermessung der Ist-Geometrie von der zu fertigenden Soll-Geometrie abweichen. Die Formkorrektur durch Abtragen (Feinstabtrag) erreicht derzeit Abtragraten von bis zu 2 mm$^3$/s, so dass für diesen Prozessschritt eine Bearbeitungszeit von $t_F$ = 25 s berücksichtigt wird. Nach den Einzelprozessen der Formgebung und - korrektur wird jeweils ein Soll-Ist-Vergleich der Geometrie mittels einer entsprechenden Messtechnik durchgeführt. Eine typische Messzeit für eine Asphäre wird mit 30 s pro Messung angenommen, was bei 3 Messzyklen eine Dauer von ca. $t_M$ = 90 s ausmacht. Zusätzlich wird eine Einrichtungszeit zwischen den Bearbeitungsschritten von insgesamt 15 s berücksichtigt. Die Gesamtprozesszeit berechnet sich damit zu $t \leq$ 375 s (ca. 6 min.). Die erreichbare Fertigungszeit einer Asphäre mit Laserstrahlung läge damit schließlich um ca. einen Faktor 10 unter dem konventionellen Schleifen und MRF-Polieren und immerhin noch um einen Faktor 2 unterhalb des Blankpressens (bei der Verwendung eines Einfachwerkzeugs), jedoch ohne die Nachteile der kostenintensiven und unflexiblen Formwerkzeuge.

Bezugszeichenliste

1 Rohling
2 fertig gestelltes optisches Element
3 sphärische Linse
4 Asphäre
5 abzutragendes Volumen

**Patentansprüche**

1. Verfahren zur Fertigung von aus Rohlingen formbaren optischen Elementen mit folgenden Schritten:

   - Bereitstellen eines Rohlings (1) für die Fertigung des optischen Elementes (2),
   - Bearbeitung mindestens einer Oberfläche des Rohlings (1) zur Annäherung an eine Soll-Oberflächenkontur durch Grobabtrag von Material mittels energetischer Strahlung,
   - Polieren mindestens der bearbeiteten Oberfläche mit energetischer Strahlung, wobei das Polieren ohne Materialabtrag erfolgt,
   - Vermessen einer Oberflächenkontur und Oberflächenrauheit der Oberfläche vor und/oder nach dem Polieren und Vergleich mit der Soll-Oberflächenkontur und einer Soll-Oberflächenrauheit, und
   - bei einer Abweichung der vermessenen Oberflächenkontur oder Oberflächenrauheit von der Soll-Oberflächenkontur und Soll-Oberflächenrauheit außerhalb einer jeweils vorgegebenen Toleranzgrenze, Feinstabtrag von Material mittels energetischer Strahlung, optional abwechselnd mit einem Polieren der Oberfläche, bis die Abweichung der Oberflächenkontur oder Oberflächenrauheit von der Soll-Oberflächenkontur und Soll-Oberflächenrauheit innerhalb der vorgegebenen Toleranzgrenze liegt.

2. Verfahren nach Anspruch 1, **dadurch gekennzeichnet,** **dass** der Grobabtrag iterativ erfolgt, wobei nach jeder Grobabtragphase die Oberflächenkontur optisch vermessen, mit der Soll-Oberflächenkontur verglichen und auf Basis des Vergleichs eine neue Grobabtragphase durchgeführt wird, bis ein vorgegebener Grad einer Annäherung an die Soll-Oberflächenkontur erreicht ist.

3. Verfahren nach Anspruch 1 oder 2, **dadurch gekennzeichnet,** **dass** der Feinstabtrag iterativ erfolgt, wobei nach jeder Feinstabtragphase die Oberflächenkontur und Oberflächenrauheit erneut vermessen, mit der Soll-Oberflächenkontur und Soll-Oberflächenrauheit verglichen und auf Basis des Vergleichs eine neue Feinstabtragphase durchgeführt wird, bis die Abweichung der Oberflächenkontur oder Oberflächenrauheit von der Soll-Oberflächenkontur und Soll-Oberflächenrauheit innerhalb der vorgegebenen Toleranzgrenze liegt.

4. Verfahren nach Anspruch 1 oder 2,
   **dadurch gekennzeichnet,**
   **dass** der Feinstabtrag im Wechsel mit dem Polieren der Oberfläche iterativ erfolgt, wobei nach jeder Feinstabtragphase und nach jeder Polierphase die Oberflächenkontur und Oberflächenrauheit jeweils erneut vermessen, mit der Soll-Oberflächenkontur und Soll-Oberflächenrauheit verglichen und auf Basis des Vergleichs eine neue Feinstabtragphase oder Polierphase durchgeführt wird, bis die Abweichung der Oberflächenkontur oder Oberflächenrauheit von der Soll-Oberflächenkontur und Soll-Oberflächenrauheit innerhalb der vorgegebenen Toleranzgrenze liegt.

5. Verfahren nach einem der Ansprüche 1 bis 4,
   **dadurch gekennzeichnet,**
   **dass** der Grobabtrag durch verdampfendes Abtragen mittels Laserstrahlung als energetischer Strahlung erfolgt.

6. Verfahren nach Anspruch 5,
   **dadurch gekennzeichnet,**
   **dass** für den Grobabtrag eine Laserleistung zwischen 100 W und 5 kW eingesetzt wird.

7. Verfahren nach einem der Ansprüche 1 bis 6,
   **dadurch gekennzeichnet,**
   **dass** der Grobabtrag mit einer Abtragrate von $\geq 10$ mm$^3$/s durchgeführt wird.

8. Verfahren nach einem der Ansprüche 1 bis 7,
   **dadurch gekennzeichnet,**
   **dass** das Polieren durch Erniedrigung der Viskosität des Oberflächenmaterials des Rohlings mit Laserstrahlung als energetischer Strahlung erfolgt.

9. Verfahren nach Anspruch 8,
   **dadurch gekennzeichnet,**
   **dass** ein $CO_2$-Laser im kontinuierlichen Betrieb zum Laserpolieren eingesetzt wird, dessen Laserstrahl defokussiert über die Oberfläche geführt wird.

10. Verfahren nach Anspruch 8 oder 9,
    **dadurch gekennzeichnet,**
    **dass** für das Polieren Laserintensitäten zwischen 10 W/cm$^2$ und 1000 W/cm$^2$ sowie ein Laserstrahl mit einem Strahldurchmesser auf der Oberfläche von mindestens 2 mm eingesetzt werden.

11. Verfahren nach einem der Ansprüche 1 bis 10,

**dadurch gekennzeichnet,**
**dass** eine nach dem Grobabtrag oder nach dem Polieren verbleibende Welligkeit der Oberfläche durch den Feinstabtrag entfernt wird.

12. Verfahren nach einem der Ansprüche 1 bis 11,

    **dadurch gekennzeichnet,**
    **dass** der Feinstabtrag mit einem Laserstrahl erfolgt, der bei kontinuierlichem oder gepulstem Betrieb des Lasers auf die Oberfläche fokussiert und mit variabler Bewegungsgeschwindigkeit über die Oberfläche geführt wird, wobei durch gezielte lokale Reduktion der Bewegungsgeschwindigkeit lokal Material verdampft wird.

13. Verfahren nach Anspruch 12,
    **dadurch gekennzeichnet,**
    **dass** für den Feinstabtrag eine Laserleistung zwischen 1 W und 250 W eingesetzt wird.

14. Verfahren nach einem der Ansprüche 1 bis 13,
    **dadurch gekennzeichnet,**
    **dass** die optische Vermessung der Oberflächenkontur und Oberflächenrauheit von einer der zu vermessenden Oberfläche gegenüber liegenden Seite des optischen Elementes (2) erfolgt.

15. Verfahren nach einem der Ansprüche 1 bis 14,
    **dadurch gekennzeichnet,**
    **dass** bei der optischen Vermessung der Oberflächenkontur und Oberflächenrauheit eine bzw. die der zu vermessenden Oberfläche gegenüber liegende Seite des optischen Elementes (2) als Referenzfläche genutzt wird.

**Claims**

1. Method for manufacturing optical elements that are formable from blanks, comprising the following steps:

   - providing a blank (1) for the manufacture of the optical element (2),
   - working at least one surface of the blank (1) to approximate a desired surface contour by coarse removal of material by means of high-energy radiation,
   - polishing at least the worked surface with high-energy radiation, wherein polishing is carried out without material removal,
   - measuring a surface contour and surface roughness of the surface before and/or after polishing, and comparing it with the desired surface contour and a desired surface roughness, and
   - if the deviation of the measured surface contour or surface roughness from the desired surface contour and desired surface roughness is outside a respectively predetermined tolerance limit, carrying out extremely fine material removal by means of high-energy radiation, optionally alternating with polishing of the surface until the deviation of the surface contour or surface roughness from the desired surface contour and the desired surface roughness is within the predetermined tolerance limit.

2. Method according to Claim 1, **characterized in that** the coarse removal is carried out iteratively, wherein the surface contour is measured optically after each coarse removal phase, compared with the desired surface contour, and a new coarse removal phase is performed on the basis of the comparison until a predetermined degree of approximation to the desired surface contour is reached.

3. Method according to Claim 1 or 2, **characterized in that** the extremely fine material removal is carried out iteratively, wherein the surface contour and surface roughness are measured again after each extremely fine removal phase, compared with the desired surface contour and the desired surface roughness, and a new extremely fine removal phase is performed on the basis of the comparison until the deviation of the surface contour or surface roughness from the desired surface contour and the desired surface roughness is within the predetermined tolerance limit.

4. Method according to Claim 1 or 2, **characterized in that** the extremely fine material removal is carried out iteratively, alternating with polishing of the surface, wherein the surface contour and surface roughness are each measured again after each extremely fine removal phase and after each polishing phase, compared with the desired surface contour and the desired surface roughness, and a new extremely fine removal phase or polishing phase is carried out on the basis of the comparison until the deviation of the surface contour or surface roughness from the desired surface contour and desired surface roughness is within the predetermined tolerance limit.

5. Method according to any one of Claims 1 to 4, **characterized in that** that the coarse removal is carried out by evaporating ablation by means of laser radiation as high-energy radiation.

6. Method according to Claim 5, **characterized in that** that a laser power between 100 W and 5 kW is used for the coarse removal.

7. Method according to any one of Claims 1 to 6, **characterized in that** the coarse removal is carried out with a removal rate of $\geq 10 \text{ mm}^3\text{/s}$.

8. Method according to any one of Claims 1 to 7, **characterized in that** the polishing is carried out by lowering the viscosity of the surface material of the blank by laser radiation as high-energy radiation.

9. Method according to Claim 8, **characterized in that** a $CO_2$ laser is used in continuous operation for laser polishing, the laser beam of which is guided over the surface in defocused mode.

10. Method according to Claim 8 or 9, **characterized in that** laser intensities between 10 W/cm$^2$ and 1000 W/cm$^2$ are used for the polishing, and a laser beam having a beam diameter of at least 2 mm on the surface is used.

11. Method according to any one of Claims 1 to 10, **characterized in that** rippling remaining in the surface after the coarse removal or after the polishing is removed by the extremely fine removal.

12. Method according to any one of Claims 1 to 11, **characterized in that** the extremely fine removal is carried out with a laser beam which is focused on the surface in continuous or pulsed operation of the laser and is guided over the surface with variable motion speed, wherein material is locally vaporized by targeted local reduction of the motion speed.

13. Method according to Claim 12, **characterized in that** a laser power of between 1 W and 250 W is used for the extremely fine removal.

14. Method according to any one of Claims 1 to 13, **characterized in that** the optical measurement of the surface contour and surface roughness is carried out from a side of the optical element (2) opposite a surface to be measured.

15. Method according to any one of Claims 1 to 14, **characterized in that** a, respectively the side of the optical element (2) opposite the surface to be measured is used as a reference surface for the optical measurement of the surface contour and surface roughness.

## Revendications

**1.** Procédé de fabrication d'éléments optiques façonnables à partir de d'ébauches comportant les étapes suivantes consistant à :

- fournir une ébauche (1) pour la fabrication de l'élément optique (2),
- usiner au moins une surface de l'ébauche (1) pour se rapprocher d'un contour de surface de consigne par enlèvement grossier de matériau au moyen d'un rayonnement énergétique,
- polir au moins la surface usinée avec un rayonnement énergétique, dans lequel le polissage est effectué sans enlèvement de matériau,
- mesurer un contour de surface et une rugosité de surface de la surface avant et/ou après le polissage et la comparaison avec le contour de surface de consigne et une rugosité de surface de consigne et
- en cas d'écart du contour de surface mesuré ou de la rugosité de surface par rapport au contour de surface de consigne et à la rugosité de surface de consigne en dehors d'une limite de tolérance prescrite respective, enlever finement du matériau au moyen d'un rayonnement énergétique, en option en alternance avec un polissage de la surface, jusqu'à ce que l'écart du contour de surface ou de la rugosité de surface par rapport au contour de surface de consigne et à la rugosité d'une surface consigne soit compris à l'intérieur de la limite de tolérance prescrite.

**2.** Procédé selon la revendication 1, **caractérisé en ce que** l'enlèvement grossier est effectué de manière itérative, dans lequel après chaque phase d'enlèvement grossier le contour de surface est mesuré optiquement, comparé avec le contour de surface de consigne et sur la base de la comparaison une nouvelle phase d'enlèvement grossier est exécutée, jusqu'à ce qu'un degré prescrit d'un rapprochement du contour de surface de consigne soit atteint.

**3.** Procédé selon la revendication 1 ou 2, **caractérisé en ce que** l'enlèvement fin est effectué de manière itérative, dans lequel après chaque phase d'enlèvement fin le contour de surface et la rugosité de surface sont de nouveau mesurés, comparés avec le contour de surface de consigne et la rugosité de surface de consigne et sur la base de la comparaison une nouvelle phase d'enlèvement fin est exécutée, jusqu'à ce que l'écart du contour de surface ou de la rugosité de surface par rapport au contour de surface de consigne et à la rugosité de surface de consigne soit compris à l'intérieur de la limite de tolérance prescrite.

**4.** Procédé selon la revendication 1 ou 2, **caractérisé en ce que** l'enlèvement fin est effectué de manière itérative en alternance avec le polissage de la surface, dans lequel après chaque phase d'enlèvement fin et après chaque phase de polissage le contour de surface et la rugosité de surface sont respectivement à nouveau mesurées, comparées avec le contour de surface de consigne et la rugosité de surface de consigne et sur la base de la comparaison une nouvelle phase d'enlèvement fin ou phase de polissage est exécutée, jusqu'à ce que l'écart du contour de surface ou de la rugosité de surface par rapport au contour de surface de consigne et à la rugosité de surface de consigne soit compris à l'intérieur de la limite de tolérance prescrite.

**5.** Procédé selon une des revendications 1 à 4, **caractérisé en ce que** l'enlèvement grossier est effectué par enlèvement avec évaporation au moyen d'un rayonnement laser faisant office de rayonnement énergétique.

**6.** Procédé selon la revendication 5, **caractérisé en ce que** pour l'enlèvement grossier une puissance de laser entre 100 W et 5 kW est employée.

**7.** Procédé selon une des revendications 1 à 6, **caractérisé en ce que** l'enlèvement grossier est effectué avec un taux d'enlèvement de ≥ 10 mm$^3$/s.

**8.** Procédé selon une des revendications 1 à 7, **caractérisé en ce que** le polissage est effectué en réduisant la viscosité du matériau de surface de l'ébauche avec un rayonnement laser faisant office de rayonnement énergétique.

**9.** Procédé selon la revendication 8, **caractérisé en ce que** un laser $CO_2$ est employé en fonctionnement continu pour le polissage laser, dont le rayon laser est guidé de manière défocalisée sur la surface.

**10.** Procédé selon la revendication 8 ou 9, **caractérisé en ce que** pour le polissage des intensités de laser comprises entre 10 W/cm$^2$ et 1000 W/cm$^2$ ainsi qu'un rayon laser avec un diamètre de rayon sur la surface d'au moins 2 mm sont employés.

**11.** Procédé selon une des revendications 1 à 10, **caractérisé en ce que** une ondulation de la surface restant après l'enlèvement grossier ou après le polissage est éliminé par l'enlèvement fin.

**12.** Procédé selon une des revendications 1 à 11, **caractérisé en ce que** l'enlèvement fin est effectué avec un rayon laser, qui est guidé lors du fonctionnement continu ou pulsé du laser de manière focalisée sur la surface et avec une vitesse de mouvement variable sur la surface, dans lequel par une réduction locale ciblée de la vitesse de mouvement, le matériau local est évaporé.

13. Procédé selon la revendication 12, **caractérisé en ce que** pour l'enlèvement fin une puissance laser entre 1 W et 250 W est employée.

14. Procédé selon une des revendications 1 à 13, **caractérisé en ce que** la mesure optique du contour de surface et de la rugosité de surface est effectuée par un côté de l'élément optique (2) situées en vis-à-vis de la surface à mesurer.

15. Procédé selon une des revendications 1 à 14, **caractérisée en ce que** lors de la mesure optique du contour de surface et de la rugosité de surface, un, respectivement le côté de l'élément optique (2) situé en vis-à-vis de la surface à mesurer est utilisé comme surface de référence.

| Ausgangs-zustand | Bearbeitung mit Laserstrahlung | Ziel |

**Ausgangs-zustand**

**Bearbeitung mit Laserstrahlung**

**Ziel**

1

2

**Halbzeug**
z.B. Sphäre oder Zylinder

**1) Grobabtrag**
Geometriefertigung

**2) Polieren**
Laserschmelzen

**3) Feinstabtrag**
Formkorrektur,
Beseitigung von
Welligkeit

**Freiformoptik**

**Vermessung der Geometrie/Formgenauigkeit**

**Messtechnik**

Fig. 1

EP 2 683 521 B1

3   4   5

$h_K$

$h_Z$

40 mm

<u>Fig. 2</u>

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007058105 A1
- US 5257706 A
- DE 10228743 A1